# EUROPÄISCHE PATENTSCHRIFT

(11) **EP 2 181 472 B1**
(45) Veröffentlichungstag und Bekanntmachung des Hinweises auf die Patenterteilung: **22.12.2010**
(21) Anmeldenummer: 08785555.7
(22) Anmeldetag: 14.08.2008
(51) Int. Cl.: H01M 4/86, H01M 4/88, H01M 8/12, D21H 17/67, H01M 4/90

(54) **VERFAHREN ZUR HERSTELLUNG EINER HOCHTEMPERATUR-BRENNSTOFFZELLE**
METHOD FOR PRODUCTION OF A HIGH-TEMPERATURE FUEL CELL
PROCÉDÉ DE FABRICATION D'UNE PILE À COMBUSTIBLE À HAUTE TEMPÉRATURE

(30) Priorität: 16.08.2007 DE 102007038838
(43) Veröffentlichungstag der Anmeldung: 05.05.2010
(73) Patentinhaber: Forschungszentrum Jülich Gmbh, 52428 Jülich (DE)
(72) Erfinder: MENZLER, Norbert, H., 52428 Jülich (DE); BUCHKREMER, Hans, Peter, 52525 Heinsberg (DE); HOFENAUER, Andreas, 82223 Eichenau (DE); BELLE, Jürgen, 81241 München (DE); HEGELE, Stephan, 81369 München (DE); MARKUSCH, Ralf, 81925 München (DE); SORG, Christoph, 36103 Flieden (DE)
(74) Vertreter: Hoppe, Karin
(86) Internationale Anmeldenummer: PCT/EP2008/006707
(87) Internationale Veröffentlichungsnummer: WO 2009/021742

(56) Entgegenhaltungen:
- EP-A- 1 502 992
- JP-A- 1 071 072
- US-A- 4 726 882
- US-A1- 2002 175 073
- GORTE R J ET AL: "Novel SOFC anodes for the direct electrochemical oxidation of hydrocarbon" JOURNAL OF POWER SOURCES, ELSEVIER, AMSTERDAM, NL, Bd. 106, Nr. 1-2, 1. April 2002 (2002-04-01), Seiten 10-15, XP004348663 ISSN: 0378-7753

## Beschreibung

Die Erfindung betrifft ein Verfahren zur Herstellung einer Hochtemperatur-Brennstoffzelle.

Bisher werden Hochtemperatur-Brennstoffzellen (SOFCs) in der Regel in Forschungseinrichtungen wie auch in der Industrie lediglich im technologischen Rahmen hergestellt. Hierbei gehen die Stückzahlen kaum über 5000 Einheiten pro Jahr hinaus, so dass bisher keine massenfertigungstauglichen Verfahren angewendet, oder im diskontinuierlichen Betriebszustand gefahren werden. Vorwiegend kommen Verfahren aus der Keramiktechnologie, wie z.B. Pressen, Gießen, Drucken, Laminieren und Ähnliches zum Einsatz.

Für Industrialisierungsprozesse ist von Nachteil, dass sie noch nicht zum Einsatz kommen, oder, wenn diese eingesetzt werden, nicht im kontinuierlichen Betrieb gefahren werden. Dies führt zur Limitierung der verfügbaren Stückzahlen sowie zu unnötig hohen Herstellungskosten. Es wird derzeit davon ausgegangen, dass die bisherigen Fertigungstechnologien nur für Stückzahlen bis ca. 100.000 pro Jahr einsetzbar sind.

Aus US 2002/0175073 ist ein Verfahren aus Papierherstellung zur Herstellung einer Polymerelektrolytbrennstoffzelle bekannt. DE 10 2006 022 598 beschreibt ein Verfahren zur Herstellung von gefüllten keramischen Parpierstrukturen.

Es ist daher die Aufgabe der Erfindung, ein Verfahren zur Herstellung von SOFCs zur Verfügung zu stellen, mit dem höhere Stückzahlen produziert werden können und das zu niedrigeren Produktionskosten führt. Das Verfahren soll massenfertigungstauglich sein.

Erfindungsgemäß wird dies durch ein Verfahren nach dem Patentanspruch 1 gelöst.

Zweckmäßige Weiterbildungen des Verfahrens und der Vorrichtung sind Gegenstand der Unteransprüche.

Erfindungsgemäß ist es insbesondere vorgesehen, dass für die Herstellung von SOFCs Verfahren aus der Papierherstellung verwendet werden.

Vorzugsweise wird bei der Herstellung eine Papierherstellungsmaschine eingesetzt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele.

Zunächst wird eine Stützstruktur geschaffen, auf die weitere Schichten aufgebracht werden. Bei der Stützstruktur im Sinne der Erfindung handelt es sich um Bestandteile, die während der Herstellung über die Papierroute als die Masse stützende Komponente dient. Die Stützstruktur wird als Füllstoff in eine Faserkomponente, vorzugsweise Zellstoffkomponente eingeführt.

Als Stützstruktur kommen verschiedene Materialien zum Einsatz.

Diese Materialien werden auf papiertechnologischem Wege als Füllstoff in eine Zellstoffkomponente eingebracht.

Für anodengestützte Zellen kann als Füllstoff beispielsweise NiO, teil- oder vollstabilisiertes ZrO₂, Ceroxid plus Dotierungen wie Gadolinium oder Yttrium oder eine beliebige Kombination dieser Komponenten verwendet werden.

Für kathodengestützte Zellen kann als Füllstoff beispielsweise Perowskite oder mindestens eine Komponente aus der Gruppe, bestehend aus Lanthan-Strontium-Manganat (LSM), Lanthan-Calcium-Manganat (LCaM), Lanthan-Strontium-Eisen-Cobaltit (LSFC), Praseodym-Strontium-Eisen-Cobaltit (PSFC) oder Lanthan-Strontium-Ferrit (LSF) eingesetzt werden.

Diese Materialien werden erfindungsgemäß in eine Fasermasse eingebracht.

Der Masseanteil der als Stützstruktur eingesetzten Materialen in der Faserstoffmasse beträgt beispielsweise 90 Gew.%.

Grundsätzlich kann der Masseanteil der Stützstruktur in der Zellstoff-Stützstrukturmischung zwischen 50 Gew.% und 95 Gew.%, 70 bis 95 Gew.% und besonders bevorzugt 80 bis 90 Gew.% liegen.

Als Zellstoffkomponente können sämtliche bei der Papiererzeugung üblichen Zellstofffasern zum Einsatz kommen.

Beispielhaft, aber nicht beschränkend, können folgende Zellstoffmaterialien genannt werden:
Zellstoffe: Sulfatzellstoff, Sulfitzellstoff.
Holzfaserstoffe: Nach thermomechanischen Verfahren hergestellter Faserstoff (TMP), chemothermomechanischen Verfahren hergestellter Faserstoff (CTMP), Holzschliff.
Weitere Faserstoffe: Baumwolle, Linters.

Als Retentionsmittel zur Bindung der Füllstoffmenge an die Zellstofffasern können papiertechnologisch übliche Retentionsmittel eingesetzt werden. Als solche können beispielhaft, aber nicht beschränkend, folgende Substanzen genannt werden: Polyvinylamine, Polyacrylamide, Polyamidamine, Aluminiumsulfate, Bentonite.

Diesen Retentionsmitteln können Additive beigefügt sein.
Als Additive können beispielsweise Stärke (z.B. Maisstärke), Latex (z.B. Acrylnitril Latex)nicht beschränkend genannt werden. Diese Additive haben einerseits die Funktion, die Füllstoffretention bei der Papiererzeugung zu verbessern und sollen andererseits dem resultierenden Papier als Binder Festigkeit verleihen.

Erfindungsgemäß wird die so hergestellte wässrige Faser-Füllstoffsuspension vorzugsweise in einem kontinuierlichen Prozess, wie er aus der Papierherstellung bekannt ist, aufgebracht, entwässert, getrocknet und verdichtet.

Beim Aufbringen wird die Faser-Füllstoffsuspension auf ein Sieb aufgebracht.

Das Aufbringen auf das Sie erfolgt vorzugsweise kontinuierlich, wie es bei der Papierproduktion üblicherweise durchgeführt wird. Dabei wird die Papierbahn "endlos", also als lange Bahn, produziert und vorzugsweise aufgerollt. Diese Produktionsweise umfasst sowohl die Herstellung des gefüllten Träger- und Stützpapiers als auch dessen Beschichtung.

Bei dem Sieb handelt es sich dabei vorzugsweise um eine Siebbahn, die ein Fördersystem durchläuft.

Durch das Sieb kann die Suspension sehr gut und sehr schnell entwässert werden, so dass rasch ein Vlies ausgebildet wird, welches über Press- und Trocknungswalzen weiter getrocknet werden kann. Ein wesentlicher geschwindigkeitsbestimmender Schritt ist somit die Entwässerungsphase auf dem Papiersieb. Zusätzlich ist auch die Festigkeit des sich bildenden Vlieses geschwindigkeitsbestimmend, da bei dem kontinuierlichen Verfahren auf der Papierbahn Zugkräfte einwirken.

Die so aufgebrachte Faser-Füllstoffsuspension wird durch Abtropfen entwässert.

Eine weitere Entwässerung kann durch das Durchlaufen von Rollensystemen erfolgen, wie sie in der Papierindustrie eingesetzt werden.

Eine weitere Entwässerung kann durch Beaufschlagen der Faser-Füllstoffsuspension mit Gas - beispielsweise Luft oder Inertgas und/oder Erwärmen erfolgen.

Die anschließende Trocknung kann ebenfalls durch Beaufschlagen der resultierenden Faser-Füllstoffmasse mit Gas - beispielsweise Luft oder Inertgas und/oder Temperatur erfolgen.

Die Verdichtung kann durch Pressen erfolgen.
Vorzugsweise kann das Pressen durch einen Durchlauf der Faser-Füllstoffmasse durch mindestens zwei Pressrollen erfolgen.

Die Verfahrensschritte, vorzugsweise Beaufschlagen des Siebes, Entwässern, Trocknen und Verdichten, werden erfindungsgemäß in einem kontinuierlichen Prozess durchgeführt.

Bevorzugt durchläuft die Faser-Füllstoffsuspension und die daraus resultierende Faser-Füllstoffmasse eine Vorrichtung, die zur Papierherstellung eingesetzt werden kann.

Die Faser-Füllstoffsuspension im Sinne der Erfindung muss ähnlich gut entwässert werden, wie bei herkömmlichen Spezialpapieren - beispielsweise Dekorpapier. Zudem sollte das Vlies die notwendige Zugfestigkeit aufweisen.

Die erzielbare Dicke des Sinterpapiers kann beispielsweise zwischen 100µm und 800µm variieren.

Auf die so hergestellte Schicht, die nun als Substrat für die weiteren SOFC-Funktionsschichten dient, können die Anode und der Elektrolyt oder die Kathode und der Elektrolyt als so genannter Strich aufgebracht werden, wobei ein Binder zugesetzt ist.

Das Aufbringen eines Strichs mit Anodenmaterial kann erfolgen, wenn als Stützstruktur ein Material verwendet wurde, welches als Anodensubstratmaterial verwendet werden kann. Wird ein Strich mit Kathodensubstratmaterial aufgetragen, so muss zuvor eine Stützstruktur aus Kathodenmaterial verwendet worden sein.

Grundsätzlich können als Elektrodenmaterialien alle üblichen oder bekannten Materialien eingesetzt werden. Es gelten grundsätzlich die gleichen Auswahlkriterien für die Elektrodenmaterialien, wie für die Brennstoffzellen, die nach Methoden nach dem Stand der Technik hergestellt werden. Somit können alle Schichtfolgen bezüglich Anode, Elektrolyt, Kathode eingesetzt werden, die auch künftig denkbar sind. Lediglich muss eine Kathode auf ein Kathodenstützmaterial und eine Anode auf ein Anodenstützmaterial aufgebracht werden. Erfindungsgemäß werden jedoch verfahrensbedingt die genannten Additive hinzugefügt.

Bevorzugt werden diese Komponenten als Strich aufgebracht.
Als Papierstrich bezeichnet man die Beschichtung von Papieren, welche z.B. mittels Blade- oder Rakelverfahren kontinuierlich aufgebracht werden.

Hierbei wird auf die aus Zellstoff und der Stützstruktur bestehende Schicht ein Feststoff aufgebracht, der mit Bindern zu einer Strichmasse verarbeitet wurde.

Als Feststoff können beispielsweise NiO und stabilisiertes ZrO₂ oder CeO₂ für die Anode und nur stabilisiertes ZrO₂ oder CeO₂ für den Elektrolyten verwendet werden.

Als Kathodenmaterial kann LSM, LCaM, LSFC, PSFC, LSF sowie Mischungen aus z. B. LSM mit YSZ oder LCaM mit YSZ als Feststoff eingesetzt werden. Als geeignete Elektrolyte können stabilisierte Zirkonium- oder Ceroxide eingesetzt werden.

Weitere Beispiele für Elektrolyten sind mit Scandiumoxid stabilisiertes ZrO₂, stabilisierte Ceroxide oder Lanthangallate. Die Feststoffe haben die Funktion einer Kathode.

Als Binder kann beispielsweise Latex und/oder Polyvinylalkohol und/oder Stärke eingesetzt werden.

Der Elektrolyt dient zur Realisierung von SOFC-Funktionalitäten.

In Abhängigkeit des Lösungsmittels der Streichmasse kann die Hydrophobizität bzw. Hydrophilizität der gefüllten Papiere durch gezielte Zugabe von papiertechnologisch üblichen Leimungsmitteln (z. B. auf der Basis von Fettakyldiketen) bei der Papierherstellung dem Papier zugeführt werden. So kann z. B. von Vorteil sein, dass zum Auftragen wässriger Streichmassen das Papier durch die Zugabe von Leimungsmitteln hydrophobiziert wird mit der Folge, dass die Streichmasse nicht zu sehr in das Papier hinein pebetriert.

Das Aufbringen der Streichmasse kann auf papiertechnologischem Weg erfolgen. Hierfür können beispielsweise die Methoden des Rakel-, Blade- oder Curtaincoating-Verfahrens angewendet werden.

Die Auftragung der Streichmasse kann bezüglich der Fasermasse beidseitig erfolgen.

Wird eine Streichmasse beidseitig aufgetragen, so kann beispielsweise auf einer Seite das Anoden- und Elektrolytmaterial und auf der anderen Seite eine Kontaktierungspaste aufgetragen werden, die den anodenseitigen Kontakt zu den metallischen Interkonnektoren herstellen soll. Dazu kann beispielsweise eine Nickelschicht verwendet werden. Weiterhin kann, um eine Verbiegung während der Sinterung zu verhindern, auf der dem Elektrolyten gegenüber liegenden Seite eine poröse Schicht aus stabilisiertem ZrO₂, also dem Elektrolytmaterials als sog. Gegenelektrolyten, aufgebracht werden. Dieses Material wird so vorkonditioniert, dass es beim Sinterprozess nicht dicht wird. Das Vorkonditionieren kann dabei durch Wahl der Partikelgröße oder Vorkalzination erfolgen.

Selbstverständlich können auch SOFCs mit alternativen Substrat, Anoden- und Elektrolytwerkstoffen - wie beispielsweise vollkeramische Substrate, Anoden mit dotierten Ceroxiden, Elektrolyte aus dotiertem Ceroxid u.ä.-, hergestellt werden.

Die noch fehlende Gegenelektrode, z.B. die Kathode, wird nach Dichtsinterung des Elektrolyten, z.B. mittels Siebdruck, Rollbeschichtung oder Vorhangbeschichtung aufgebracht. Geeignete Kathodenmaterialien sind beispielsweise LSM, LCaM, LSFC, PSFC, LSF sowie Mischungen aus z. B. LSM mit YSZ oder LCaM mit YSZ.

Als Anodenmaterialien können beispielsweise NiO/YSZ, stab. CeO₂/YSZ eingesetzt werden die Beispiels sind jedoch nicht beschränkend.

Typische Materialpaare sind für die Anode: NiO/8YSZ; Elektrolyt: 8YSZ; Kathode: LSM/8YSZ oder LSFC; weiteres Beispiel Anode: NiO/CeO₂, Elektrolyt: CeO₂; Kathode LSFC.
Wesentlicher Vorteil des Verfahrens ist, dass damit Bahnen von SOFC-Material mit Geschwindigkeiten von bis zu 500 m/min oder schneller hergestellt werden können, also mit Geschwindigkeiten, wie sie bei der Papierherstellung auftreten. Herkömmliche Verfahren arbeiten mit Geschwindigkeiten von 300 mm/min. Durch die schnelle Herstellungsweise erhöht sich der SOFC-Bauteil-Ausstoß pro Zeiteinheit erheblich. Die Produktionskosten werden pro Stück erheblich gesenkt.

Vorzugsweise ist vorgesehen, das Verfahren mit klassischen Papierherstellungsmaschinen durchzuführen, da mit diesen Vorrichtungen hohe Produktionsgeschwindigkeiten erzielt werden können.

Die so hergestellten Hochtemperatur - Brennstoffzellen werden gesintert, um organische Zusatzstoffe auszutreiben (Entbinderung) und um einen Verbund der oxidischen Partikel herzustellen, da anderenfalls nach der Entbinderung nur eine lose Pulverschüttung vorliegt, die nicht stabil ist.

### Beispiel:

### Laborblattbildung:

In einem Ausführungsbeispiel wurde ein kommerzielles sinterträges mit Yttriumoxid voll stabilisiertes Zirkoniumdioxid 8YSZ, zweier Qualitäten (spezifiziert als <2µm bzw. <5µm) unter Zumischung von Nadelholzzellstoff (17,7 Gew.%), Polyvinylamin (0,3 Gew.%) und Latex (3 Gew.%) zu einer wässrigen Papiermasse verarbeitet und auf einem Laborblattbildner (Rapid-Köthen-Verfahren) zu kreisrunden Laborblättern mit einem Durchmesser von 200 mm verarbeitet. Der Anteil des keramischen Füllers lag bei 80 Gew.%. Drei derartige Blätter wurden bei noch hohem Feuchtigkeitsgehalt vor dem Trocknen zu einem homogenen Nassvlies laminiert, vergautscht, anschließend getrocknet und kalandriert (verdichtet). Das Resultat war eine 400 µm dicke, runde Platte mit einem Durchmesser von 200 µm. Darauf wurde als Strich eine Masse aus 8 YSZ, Latex und Polyvinylalkohol mit einem Streichrakel ca. 20 µm dick beidseitig aufgebracht. Es handelt sich somit um eine poröse 8 YSZ Tragstruktur, und eine nahezu dichte Elektrolytstruktur. Für die ersten Versuche wurde aus sicherheitstechnischen Gründen auf den Einsatz eines 8YSZ Pulvers von NiO verzichtet.

Die aus den großen Platten ausgeschnittenen kleineren Strukturen (50x50mm²) konnten im Ofen bei 1400°C problemlos gesintert werden. Es trat weder ein Verzug noch eine Verbiegung auf. Die Proben waren noch nicht gasdicht (Elektrolytseite), aber durch Einsatz eines sinteraktiven 8 YSZ Pulvers, wie es bereits üblicherweise für den Elektrolyten verwendet wird, kann dieser gasdicht gesintert werden.

Der Feststoffgehalt wurde im ersten Versuch auf einen Maximalwert von 85 % gebracht, kann aber im Bedarfsfall auch geringere Werte als 85 betragen, was in einigen Fällen bevorzugt ist.

## Patentansprüche

1. Verfahren zur Herstellung von Hochtemperatur-Brennstoffzellen, umfassend folgende Schritte,
a) Einbringen eines Füllstoffs als Stützstruktur in eine wässrige Fasersuspension;
b) Zugabe eines Retentionsmittels;
c) Aufbringen dieser Mischung aus a) und b) auf ein Sieb;
d) Entwässern der Suspension nach a) und b);
e) Trocknen der Suspension nach a) und b);
f) Verdichten der gewonnenen Masse;
g) Aufbringen eines Strichs mit Elektrodenmaterial;
h) Aufbringen eines Strichs mit Elektrolytmaterial;
i) Dichtsintern des Elektrolyts,
j) Aufbringen der Gegenelektrode.

2. Verfahren nach Anspruch 1, **dadurch gekennzeichnet, dass** das Verfahren in einem kontinuierlichen Prozess durchgeführt wird.

3. Verfahren nach Anspruch 1 oder 2, **dadurch gekennzeichnet, dass** als Füllstoff ein Anodenmaterial, insbesondere NiO oder ZrO₂ (teil- oder vollstabilisiert) oder eine Kombination davon, oder ein Kathodenmaterial, insbesondere mindestens eine Komponente aus der Gruppe bestehend aus LSM, LCaM, LSFC, PSFC, eingesetzt wird.

4. Verfahren nach einem der Ansprüche 1 bis 3, **dadurch gekennzeichnet, dass** als Faserkomponente mindestens eine Komponente aus der Gruppe bestehend aus Zellstofffaser, Sulfatzellstoff, Sulfitzellstoff, Holzfaserstoff, nach thermomechanischem Verfahren hergestellter Faserstoff (TMP), nach chemothermomechanischem Verfahren hergestellter Faserstoff (CTMP), Holzschliff, Baumwolle und Linters eingesetzt wird.

5. Verfahren nach einem der Ansprüche 1 bis 4, **dadurch gekennzeichnet, dass** als Retentionsmittel mindestens eine Komponente aus der Gruppe, bestehend aus Polyvinylamin, Polyacrylamin, Polyamidamin, Aluminiumsulfat und Bentonit eingesetzt wird.

6. Verfahren nach einem der Ansprüche 1 bis 5, **dadurch gekennzeichnet, dass** die Trocknung durch Pressen, beispielsweise über Trocknungswalzen, und/oder Beaufschlagen mit einem Gas und/oder Temperieren erfolgt.

7. Verfahren nach einem der Ansprüche 1 bis 6, **dadurch gekennzeichnet, dass** die Verdichtung durch Pressen, insbesondere durch Durchlaufen durch mindesten zwei Pressrollen erfolgt.

8. Verfahren nach einem der Ansprüche 1 bis 7, **dadurch gekennzeichnet, dass** als Elektrodenmaterial nach Schritt g) Anodenmaterial, insbesondere NiO, ZrO2, CeO, oder CuO, aufgebracht wird.

9. Verfahren nach einem der Ansprüche 1 bis 8, **dadurch gekennzeichnet, dass** als Elektrodenmaterial nach g) ein Kathodenmaterial, insbesondere LSM, LSF, LCaM, LSFC oder PSFC, eingesetzt wird.

10. Verfahren nach Anspruch 8 oder 9, **dadurch gekennzeichnet, dass** als Elektrolyt nach h) mit Y₂O₃ oder Sc₂0₃ stabilisiertes ZrO₂, stabilisiertes CeO₂ oder Lanthangallate eingesetzt wird.

11. Verfahren nach Anspruch 8, **dadurch gekennzeichnet dass** als Gegenelektrode eine Kathode, insbesondere umfassend als Kathodenmaterial LSM, LSF, LCaM, LSFC oder PSFC, aufgebracht wird.

12. Verfahren nach Anspruch 9, **dadurch gekennzeichnet, dass** als Gegenelektrode eine Anode, insbesondere umfassend als Anodenmaterial NiO, ZrO₂, CeO₂ oder auch CuO, aufgebracht wird.

13. Verfahren nach einem der Ansprüche 1 bis 12, **dadurch gekennzeichnet, dass** eine Streichmasse auf beiden Seiten der Faserschicht aufgebracht wird.

14. Verfahren nach Anspruch 13, **dadurch gekennzeichnet, dass** die Streichmasse ein Elektroden/ Elektrolytmaterial oder eine Kontaktierungspaste, beispielsweise eine Nickelschicht, ist.

15. Verwendung einer Papierherstellungsmaschine, die für die kontinuierliche Papierherstellung geeignet ist, für die Herstellung von Hochtemperatur-Brennstoffzellen gemäß einem der Ansprüche 1 bis 14.

## Claims

1. Method for production of high-temperature fuel cells comprising the following steps,
a) Introduction of a filler into an aqueous fibre suspension as a supporting structure;
b) Addition of a retention agent;
c) Application of this mixture made up of a) and b) to a screen;
d) Drainage of the suspension according to a) and b)
e) Drying of the suspension according to a) and b);
f) Compression of the mass obtained;
g) Application of a coat of electrode material;
h) Application of a coat of electrolyte material;
i) Dense sintering of the electrolyte,
j) Application of the counterelectrode.

2. Method according to claim 1, **characterised in that** the method is carried out in a continuous process.

3. Method according to claim 1 or 2, **characterised in that** an anode material, particularly NiO or ZrO₂ (partly or completely stabilised) or a combination of these, or a cathode material, particularly at least one component from the group consisting of LSM, LCaM, LSFC, PSFC, is used as the filler.

4. Method according to one of claims 1 to 3, **characterised in that** at least one component from the group consisting of cellulose fibre, sulphate cellulose, sulphite cellulose, wood pulp, pulp produced according to the thermomechanical method (TMP), pulp produced according to the chemo-thermomechanical method (CTMP), mechanical wood pulp, cotton and linters are used as the fibre component.

5. Method according to one of claims 1 to 4, **characterised in that** at least one component from the group consisting of polyvinyl amine, polyacryl amine, polyamide amine, aluminium sulphate and bentonite is used as the retention agent.

6. Method according to one of claims 1 to 5, **characterised in that** drying is carried out by pressing, using drying rollers for example, and/or application of a gas and/or tempering.

7. Method according to one of claims 1 to 6, **characterised in that** compression is carried out by pressing, particularly by running through at least two rollers.

8. Method according to one of claims 1 to 7, **characterised in that** anode material, particularly NiO, ZrO2, CeO or CuO is applied as the electrode material according to step g).

9. Method according to one of claims 1 to 8, **characterised in that** a cathode material, particularly LSM, LSF, LCaM, LSFC or PSFC is used as the electrode material according to g).

10. Method according to claim 8 or 9, **characterised in that** ZrO₂ stabilised with Y₂O₃ or Sc₂O₃, stabilised CeO₂ or lanthangallate is used as the electrolyte according to h).

11. Method according to claim 8, **characterised in that** a cathode, particularly comprising LSM, LSF, LCaM, LSFC or PSFC as the cathode material, is applied as the counterelectrode.

12. Method according to claim 9, **characterised in that** an anode, particularly comprising NiO, ZrO₂, CeO₂ or also CuO as the anode material, is used as the counterelectrode.

13. Method according to one of claims 1 to 12, **characterised in that** a coating compound is applied to both sides of the fibre layer.

14. Method according to claim 13, **characterised in that** the coating compound is an electrode/electrolyte material or a contacting paste, such as a nickel layer for example.

15. Use of a paper production machine, which is suitable for the continuous production of paper, for the production of high-temperature fuel cells according to one of claims 1 to 14.

## Revendications

1. Procédé de fabrication de piles à combustible à haute température, comprenant les étapes suivantes :
a) introduction d'un matériau de charge comme structure de renfort dans une suspension de fibres aqueuse ;
b) ajout d'un agent de rétention ;
c) déversement de ce mélange de a) et b) sur un tamis ;
d) déshydratation de la suspension issue de a) et b) ;
e) séchage de la suspension issue de a) et b) ;
f) compactage de la masse obtenue ;
g) application d'une barre avec un matériau d'électrode ;
h) application d'une barre avec un matériau d'électrolyte ;
i) densification de l'électrolyte par frittage
j) application de la contre-électrode.

2. Procédé selon la revendication 1, **caractérisé en ce que** le procédé est exécuté sous forme de processus continu.

3. Procédé selon la revendication 1 ou la revendication 2, **caractérisé en ce qu'**un matériau d'anode, en particulier NiO ou ZrO₂ (partiellement ou intégralement stabilisé) ou une combinaison des deux, ou un matériau de cathode, en particulier au moins un composant du groupe constitué de LSM, LCaM, LSFC, PSFC, est utilisé comme matériau de charge.

4. Procédé selon l'une des revendications 1 à 3, **caractérisé en ce qu'**est utilisé comme composant fibreux au moins un composant du groupe constitué de fibres de cellulose, pâte au sulfate, pâte au bisulfite, fibres de bois, matière fibreuse produite par procédé thermomécanique (TMP), matière fibreuse produite par procédé chimio-thermomécanique (CTMP), pâte de bois, coton et linters.

5. Procédé selon l'une des revendications 1 à 4, **caractérisé en ce qu'**est utilisé comme agent de rétention au moins un composant du groupe constitué de polyvinylamine, polyacrylamide, polyamidamine, sulfate d'aluminium et bentonite.

6. Procédé selon l'une des revendications 1 à 5, **caractérisé en ce que** le séchage est effectué par pressage, notamment au moyen de cylindres de séchage, et/ou par exposition à une gaz et/ou thermostatisation.

7. Procédé selon l'une des revendications 1 à 6, **caractérisé en ce que** le compactage est effectué par pressage, en particulier par passage par au moins deux cylindres de presse.

8. Procédé selon l'une des revendications 1 à 7, **caractérisé en ce qu'**un matériau d'anode est appliqué comme matériau d'électrode en étape g), en particulier NiO, ZrO₂, CeO₂ ou CuO.

9. Procédé selon l'une des revendications 1 à 8, **caractérisé en ce qu'**un matériau de cathode est utilisé comme matériau d'électrode en étape g), en particulier LSM, LSF, LCaM, LSFC ou PSFC.

10. Procédé selon la revendication 8 ou la revendication 9, **caractérisé en ce que** du ZrO₂ stabilisé avec du Y2O₃ ou Sc2O₃, du CeO₂ stabilisé ou du gallate de lanthane est utilisé comme électrolyte en étape h).

11. Procédé selon la revendication 8, **caractérisé en ce qu'**une cathode est appliquée comme contre-électrode, laquelle comprend en particulier LSF, LCaM, LSFC ou PSFC comme matériau de cathode.

12. Procédé selon la revendication 9, **caractérisé en ce qu'**une anode est appliquée comme contre-électrode, laquelle comprend en particulier NiO, ZrO₂, CeO₂ ou aussi CuO comme matériau d'anode.

13. Procédé selon l'une des revendications 1 à 12, **caractérisé en ce qu'**une pâte à enduire est appliquée sur les deux côtés de la couche fibreuse.

14. Procédé selon la revendication 13, **caractérisé en ce que** la pâte à enduire est un matériau d'électrode/d'électrolyte cu une pâte de contact, notamment une couche de nickel.

15. Utilisation d'une machine à fabriquer du papier appropriée pour une production continue de papier, pour la fabrication de piles à combustible, en particulier de piles à combustible à haute température selon l'une des revendications 1 à 14.
